# EUROPEAN PATENT SPECIFICATION

(11) **EP 2 294 910 B1**
(45) Date of publication and mention of the grant of the patent: **23.10.2013**
(21) Application number: 10175234.3
(22) Date of filing: 03.09.2010
(51) Int. Cl.: A01G 9/24

(54) **Photovoltaic greenhouse with improved efficiency**
Solar-Gewächshaus mit verbesserter Wirksamkeit
Serre photovoltaïque à efficacité améliorée

(30) Priority: 11.09.2009 IT MI20091561; 23.03.2010 IT MI20100469
(43) Date of publication of application: 16.03.2011
(60) Divisional application: 13156438.7
(73) Proprietor: Gramma Green Asset Management S.R.L., 20121 Milano (IT)
(72) Inventor: Rubbia, Silvio, 20123, Milano (IT)
(74) Representative: Modiano, Micaela Nadia

(56) References cited:
- WO-A1-2008/058950
- DE-U1-202007 010 836

## Description

The present invention relates to a photovoltaic greenhouse with improved efficiency. More specifically, the invention relates to a photovoltaic greenhouse that offers both an optimal environment for cultivation inside the greenhouse, and also an optimal yield from an energy point of view.

As well known, photovoltaic greenhouses are light structures made of iron or of wood, used for agricultural cultivation or for floriculture, the roof whereof, generally built with a single pitch facing south, is covered by photovoltaic panels: see for example DE 20 2007 010 836 U1.

According to the area of the land, two or more greenhouse modules may be set up together.

Unlike photovoltaic systems installed at ground level, the costs for preparing the ground are considerably reduced, since greenhouses are generally built on flat terrain and because a substrate procured by the farmer at their own expense is used for cultivation.

The continuous presence of workers on the work site, and the fact that the installed photovoltaic system is a roof-mounted system, ensure that the costs of surveillance are reduced to a minimum.

Therefore the photovoltaic greenhouses are becoming increasingly attractive due to their capacity to allow cultivation inside the greenhouse and at the same time to provide electricity by means of the photovoltaic panels that cover the single-pitch roof of the greenhouse.

Since the photovoltaic greenhouses have to simultaneously guarantee agricultural production and the production of electricity from the photovoltaic system, those crops that need only diffused light are definitely among the best adapted for photovoltaic greenhouses currently in use.

In fact, photovoltaic greenhouses enable the correct balance to be achieved between the appropriate irradiation in the greenhouse in winter, and sufficient protection from excessive irradiation in summer.

Those crops that need direct and high intensity light need to be arranged in photovoltaic greenhouses in which the modules do not cover the entire surface of the roof of the greenhouse, but rather be arranged in a chessboard pattern, alternating with totally transparent panels, in such a way as to ensure nevertheless a certain level of solar irradiation over the course of the day.

Substantially, the photovoltaic panel, in order to be highly efficient, must absorb as much light radiation as possible, and hence they must not admit light into the greenhouse. This requirement is however in contrast with the fact that the crops need to receive light.

Therefore, photovoltaic modules can be provided which have the chessboard configuration described above within the same module, i.e., instead of having photovoltaic modules arranged in a chessboard pattern alternating with totally transparent panels, within any one module there are photovoltaic sub-modules arranged in a chessboard pattern with transparent sub-modules.

However, the solutions given above, besides being expensive to build and implement, do not demonstrate adequate efficiency, either in terms of producing electricity or in terms of the possible forms of cultivation that can be performed inside the greenhouse.

The aim of the present invention is to provide a photovoltaic greenhouse that has an improved efficiency, both in terms of producing electricity and in terms of the possible forms of cultivation inside said greenhouse.

Within this aim, an object of the present invention is to provide a photovoltaic greenhouse in which the yield is improved as a function of the angle of incidence of the solar rays.

Another object of the invention is to provide a photovoltaic greenhouse in which the arrangement of the photovoltaic panels is implemented as a function of the degree of brightness that is desired to be provided under the roof of the greenhouse.

Another object of the invention is to provide a photovoltaic greenhouse in which the circulation of air in the greenhouse can occur both by means of natural convection and by means of forced convection, with greater facility and thermal homogeneity and with less dynamic load loss in order to guarantee a high level of cultivability inside the greenhouse.

Another object of the present invention is to provide a photovoltaic green house that is highly reliable, easy to implement and at low cost.

This aim, as well as these and other objects which will become better evident hereinafter, are achieved by a photovoltaic greenhouse, comprising a structure for supporting a roof of at least one pitch, **characterised in that** said roof has at least one portion thereof that is totally free from photovoltaic panels in order to permit the incident solar rays to irradiate the bottom surface of the greenhouse, and in that the remaining portion of said roof is provided with photovoltaic panels that have a capacity of absorption of incident solar rays that increases from a minimum value at the boundary with said portion of the roof that is free from photovoltaic panels, to a maximum value at the ridge of said roof.

Further characteristics and advantages of the invention will become better apparent from the description of a preferred, but not exclusive, embodiment of the photovoltaic greenhouse according to the present invention, illustrated by way of a non-limiting example in the accompanying drawings, wherein:

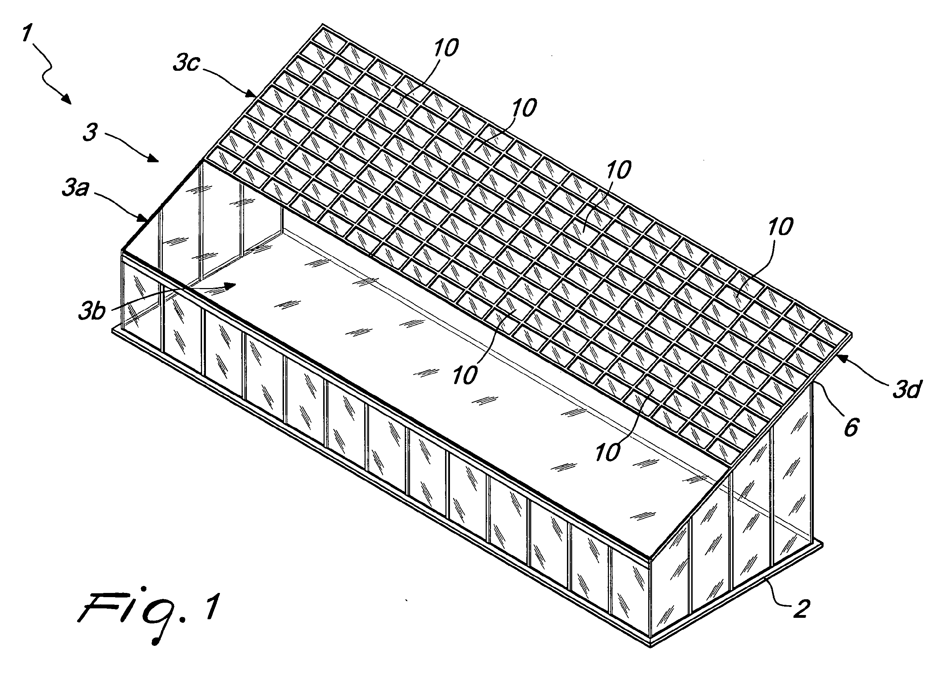

Figure 1 shows a perspective view of a photovoltaic greenhouse according to the invention;
Figure 2 shows a schematic side elevation view of the photovoltaic greenhouse according to the invention;
Figure 3 shows a perspective view of the greenhouse structure according to the present invention, in a second embodiment;
Figure 4 shows a schematic side elevation view of the photovoltaic greenhouse of Figure 3, with the windows in the closed position;
Figure 5 shows a schematic side elevation view of the photovoltaic greenhouse of Figures 3 and 4, with the windows in the open position.

With reference to the figures, the photovoltaic greenhouse according to the invention, generally indicated by the reference numeral 1, comprises a supporting structure 2 that is provided with a pitched roof 3, adapted to define the greenhouse. Conveniently, the roof 3 is inclined for example with an angle of about 45° with respect to the terrain.

Obviously this angle can be varied according to the requirements.

The distinctive feature of the invention consists in the fact that the roof 3 is at least partially covered with solar panels. More precisely, a portion 3a of the roof, which is arranged at angles of incidence of solar rays that are substantially less than or equal to 45°, is totally free from photovoltaic panels, in order to be transparent to solar rays and thus allow the cultivation of plants and the like inside the greenhouse.

Substantially, the portion 3a of roof that is totally free from photovoltaic panels is that portion for which the incident solar rays, through such portion, succeed in completely irradiating the bottom surface 3b that is useful for cultivation.

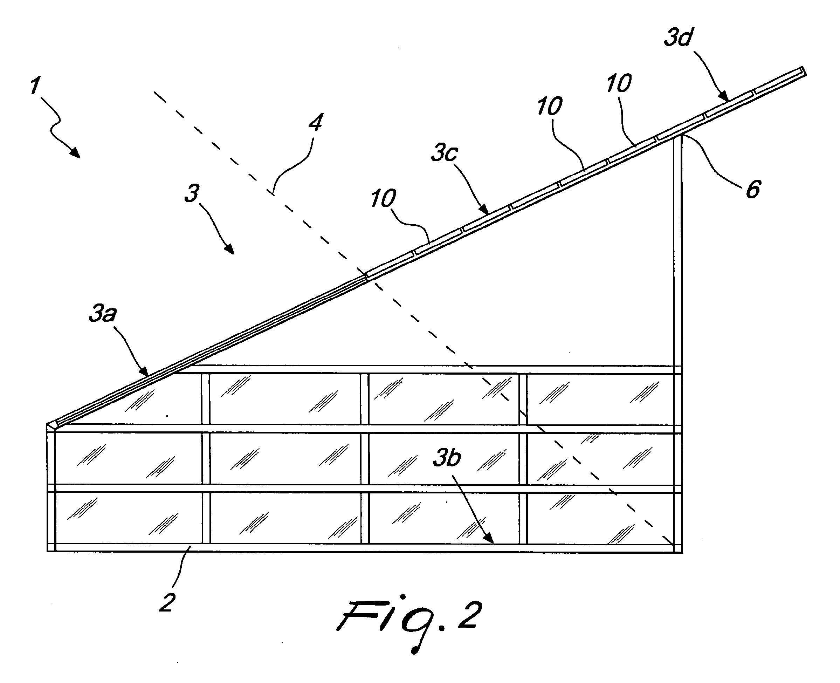

In figure 2 the reference numeral 4 indicates a solar ray that is incident substantially at 45° with respect to the ground and which is such as to irradiate the farthest useful point of the surface 3b of the greenhouse, i.e. such as to reach the right angle defined between the bottom 3b of the greenhouse and the vertical wall 5 of the greenhouse.

The remaining portion 3c of the roof 3 is provided with photovoltaic panels 10 that have a degree of absorption of solar rays that increases proportionally and gradually as it approaches the ridge of the pitched roof 3.

Substantially, the photovoltaic panels arranged farther away from the ridge 6 of the roof will have a greater degree of transparency than the panels 10 arranged nearer to the ridge 6 of the roof, which instead will have a total degree of absorption of solar rays, i.e. they will not let any solar rays through them. In fact, the passage of solar rays at region 3c of the roof 3 would not have any further utility in terms of cultivation since the solar rays would not strike the region or bottom surface 3b of the greenhouse.

Conveniently, the roof 3 has a further region 3d, arranged as an extension of the region 3c, beyond the ridge 6 of the roof, in order to take further advantage of a roof surface upon which it is possible to locate photovoltaic panels 10 that have a degree of absorption of solar energy of 100%.

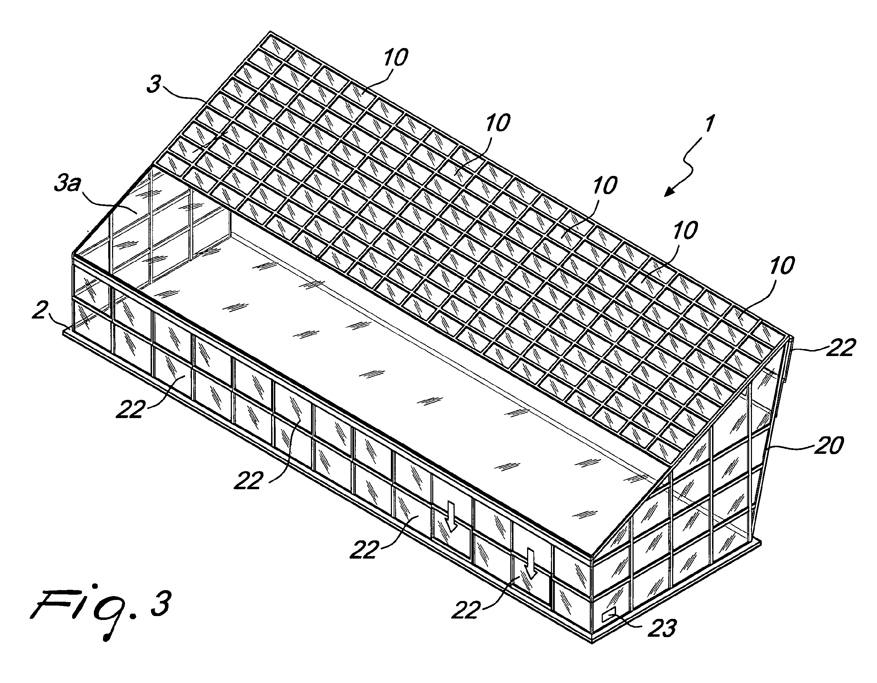

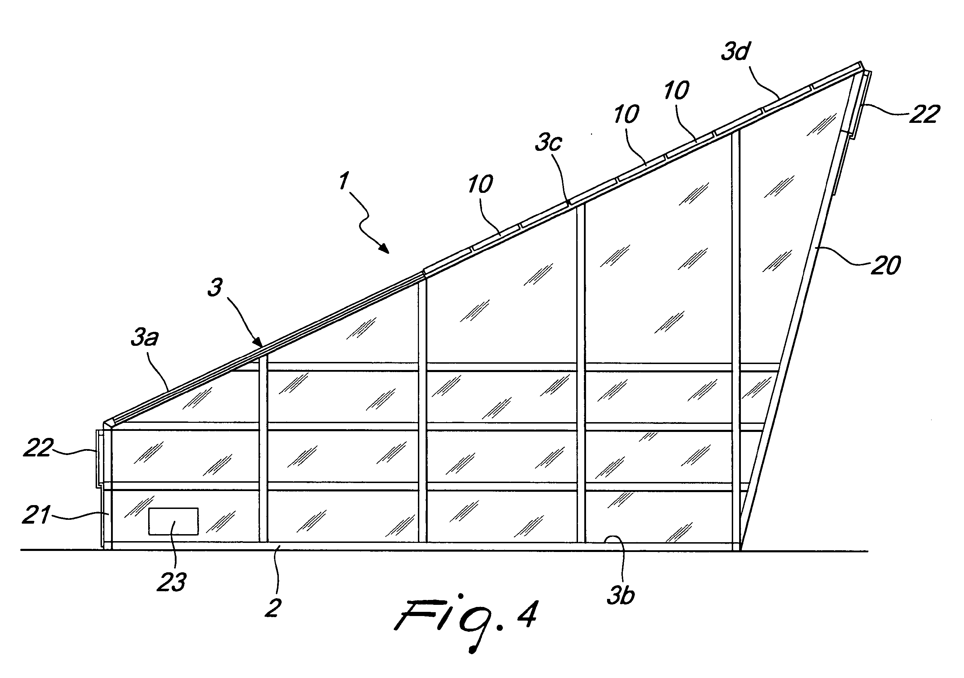

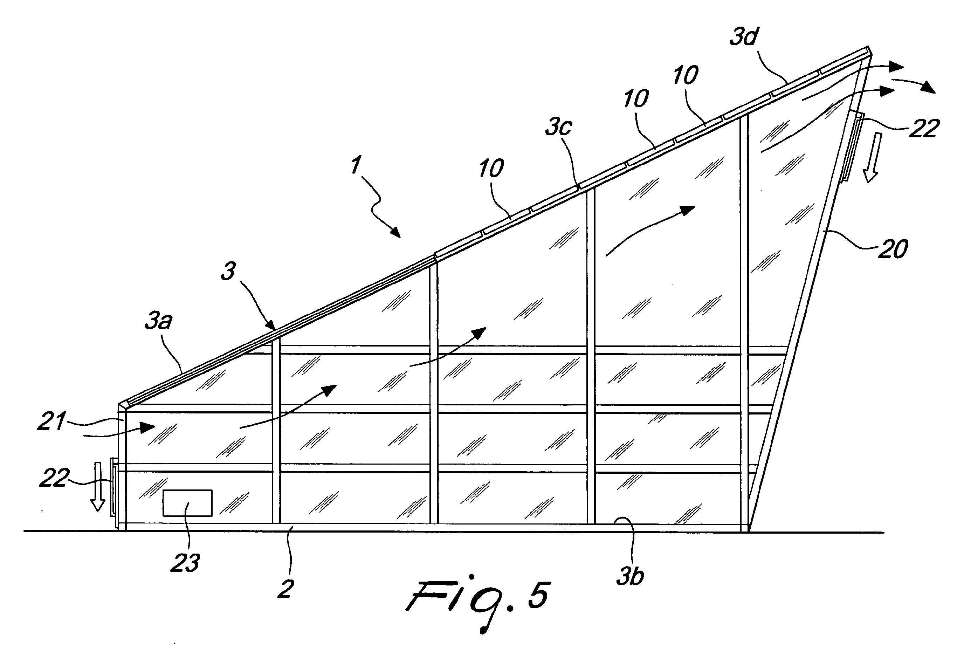

Figures 3, 4 and 5 show a second embodiment of the greenhouse according to the present invention.

In this second embodiment, conveniently, the portion 3d of extension of the roof is connected to the bottom surface of the greenhouse by means of a sloping wall 20. Therefore, the roof 3 of the photovoltaic greenhouse is supported by a vertical wall 21 which is arranged perpendicularly to the ground and by a sloping wall 20 which is arranged at an angle of from 10° to 40° with respect to the vertical.

Both the wall 21 and the wall 20 are provided with windows 22 which are adapted to be brought to the open position by means of, for example, a sliding movement, in such a way as to allow a flow of air through the inside of the photovoltaic greenhouse.

In particular, the sloped shape of the wall 20 makes it possible to have a "chimney" effect which determines a significant flow of air by means of natural convection, and at the same time a greater thermal uniformity in the different areas of the greenhouse and in particular in the area nearest to the sloping wall 20.

This will make it possible to effectively dispose of the heat of the photovoltaic panels, so contributing to reduce their temperature, and it also allows an optimal ventilation inside the greenhouse.

The natural convection derived from the aforementioned chimney effect is increased by the use of ventilation means 23 which make it possible to obtain, with low losses, a forced convection of air that can be combined with the aforementioned natural convection.

The portion 3d of the roof, thus implemented, i.e. connected to the bottom surface of the greenhouse by means of the sloping wall 20, is in this fashion to be considered an integral and functional part of the greenhouse, and no longer a mere extension of the greenhouse.

Moreover, the extension portion of the roof 3d, which in this case is to be considered an integral part of the greenhouse, means that the wind no longer produces the typical "sail" effect of an overhanging canopy, as a result of distributing the thrust of the wind over all of the sloping wall, and this guarantees a high level of structural solidity to the photovoltaic greenhouse.

In practice it has been found that the photovoltaic greenhouse according to the invention fully achieves the aim and objects, since it allows the passage of those solar rays that will then be incident on the bottom surface of the greenhouse, i.e. the surface that is useful for cultivating plants and the like, by partially to totally absorbing the solar rays that are incident on that portion of roof of the greenhouse through which the sun rays would not strike the useful bottom surface area of the greenhouse.

Moreover, the extension of the roof, beyond its natural ridge, makes it possible to exploit a larger area upon which to arrange photovoltaic panels which can, in this case, completely absorb the incident solar rays, since there is no need to allow the solar rays to pass through to underneath them.

Moreover, the invention allows the creation of an efficient circulation of air by means of natural or forced convection inside the greenhouse, deriving from the exploitation of the chimney effect which is obtained by the use of the sloping wall that connects the portion of extension of the roof of the greenhouse with the bottom surface of such greenhouse, and is also simpler and more economic in design.

The invention thus conceived is susceptible of numerous modifications and variations, all of which are within the scope of the appended claims. Moreover, all the details may be replaced by other technically equivalent elements.

In practice the materials employed, as well as the dimensions and the contingent shapes, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A photovoltaic greenhouse (1), comprising a structure (2) for supporting a roof (3) of at least one pitch, wherein said roof (3) has at least one portion (3a) thereof that is totally free from photovoltaic panels in order to permit the incident solar rays to irradiate the bottom surface (3b) of the greenhouse, and in that the remaining portion (3c) of said roof (3) is provided with photovoltaic panels (10), **characterised in that** the photovoltaic panels have a capacity of absorption of incident solar rays that increases from a minimum value at the boundary with said portion (3a) of the roof that is free from photovoltaic panels (10), to a maximum value at the ridge (6) of said roof (3).

2. The photovoltaic greenhouse according to claim 1, **characterised in that** said portion (3a) of said roof which is totally free from photovoltaic panels is of an extension such that the solar rays that strike said portion (3a) strike the bottom surface (3b) of said greenhouse in such a way as to totally irradiate said bottom surface (3b).

3. The photovoltaic greenhouse according to claim 1 or 2, **characterised in that** said roof (3) is a roof with a single pitch inclined at 45° with respect to the bottom surface (3b) of the greenhouse.

4. The photovoltaic greenhouse according to one or more of the preceding claims, **characterised in that** said roof (3) has a portion of extension (3d) that extends beyond the ridge (6) of said roof, as an extension of said portion (3c) that is provided with photovoltaic panels (10).

5. The photovoltaic greenhouse according to claim 4, **characterised in that** said portion (3d) of extension of said roof (3) is covered with photovoltaic panels (10) that absorb the entire incident solar radiation.

6. The photovoltaic greenhouse according to claim 1, **characterised in that** said supporting structure (2) comprises at least two facing walls (20, 21) of which one wall (21) is vertical with respect to the bottom surface of said greenhouse and one wall (22) is sloped with respect to the vertical from said bottom surface, said roof (3) being connected, at the ridge (6), to said sloped wall (20).

7. The photovoltaic greenhouse according to claim 6, **characterised in that** said wall (20) is sloped with respect to the vertical from said bottom surface according to an angle that is comprised between 10° and 40°.

8. The photovoltaic greenhouse according to claim 6, **characterised in that** said vertical wall (21) and said sloped wall (20) are provided with windows that can be opened (22).

9. The photovoltaic greenhouse according to one or more of the preceding claims, **characterised in that** it comprises ventilation means (23) that are adapted to generate a forced convection of air inside said greenhouse.

## Patentansprüche

1. Ein photovoltaisches Treibhaus (1), das Folgendes umfasst: eine Struktur (2) zum Tragen eines Dachs (3) mit mindestens einer Neigung; wobei das Dach (3) mindestens einen Abschnitt (3a) davon hat, der vollständig frei von Photovoltaikmodulen ist, um es den einfallenden Sonnenstrahlen zu ermöglichen, die Bodenfläche (3b) des Treibhauses zu bestrahlen, und wobei der restliche Teil (3c) des Dachs (3) mit Photovoltaikmodulen (10) ausgestattet ist, **dadurch gekennzeichnet, dass** die Photovoltaikmodule eine Absorptionskapazität für einfallende Sonnenstrahlen haben, die von einem Minimalwert an der Grenze zu dem Abschnitt (3a) des Dachs, der frei von Photovoltaikmodulen (10) ist, auf einen Maximalwert am First (6) des Dachs (3) ansteigt.

2. Das photovoltaische Treibhaus gemäß Anspruch 1, **dadurch gekennzeichnet, dass** der Teil (3a) des Dachs, der vollständig frei von Photovoltaikmodulen ist, von einer solchen Ausdehnung ist, dass die Sonnenstrahlen, die auf den Abschnitt (3a) treffen, auf die Bodenfläche (3b) des Treibhauses auf solche Art und Weise auftreffen, dass sie die Bodenfläche (3b) vollständig bestrahlen.

3. Das photovoltaische Treibhaus gemäß Anspruch 1 oder 2, **dadurch gekennzeichnet, dass** das Dach (3) ein Dach mit einer einzigen Neigung ist, die um 45° zur Bodenfläche (3b) des Treibhauses geneigt ist.

4. Das photovoltaische Treibhaus gemäß einem oder mehreren der obigen Ansprüche, **dadurch gekennzeichnet, dass** das Dach (3) einen Verlängerungsabschnitt (3d) hat, der sich über den Dachfirst (6) hinaus erstreckt, als Verlängerung des Teils (3c), der mit Photovoltaikmodulen (10) ausgestattet ist.

5. Das photovoltaische Treibhaus gemäß Anspruch 4, **dadurch gekennzeichnet, dass** der Verlängerungsabschnitt (3d) des Dachs (3) mit Photovoltaikmodulen (10) bedeckt ist, welche die gesamte einfallende Sonneneinstrahlung absorbieren.

6. Das photovoltaische Treibhaus gemäß Anspruch 1, **dadurch gekennzeichnet, dass** die tragende Struktur (2) mindestens zwei gegenüberliegende Wände (20, 21) umfasst, von denen eine (21) vertikal zur Bodenfläche des Treibhauses ist und eine (22) mit Bezug auf die Vertikale von der Bodenfläche schräg ist, wobei das Dach (3) am First (6) mit der schrägen Wand (20) verbunden ist.

7. Das photovoltaische Treibhaus gemäß Anspruch 6, **dadurch gekennzeichnet, dass** die Wand (20) mit Bezug auf die Vertikale von der Bodenfläche in einem Winkel schräg ist, der zwischen 10° und 40° liegt.

8. Das photovoltaische Treibhaus gemäß Anspruch 6, **dadurch gekennzeichnet, dass** die vertikale Wand (21) und die schräge Wand (20) mit Fenstern (22) versehen sind, die geöffnet werden können.

9. Das photovoltaische Treibhaus gemäß einem oder mehreren der obigen Ansprüche, **dadurch gekennzeichnet, dass** es Belüftungsmittel (23) umfasst, die ausgebildet sind, um eine erzwungene Konvektion von Luft innerhalb des Treibhauses zu erzeugen.

## Revendications

1. Serre photovoltaïque (1), comportant une structure (2) destinée à supporter un toit (3) ayant au moins une pente, dans laquelle ledit toit (3) présente au moins une partie (3a) de celui-ci totalement dépourvue de panneaux photovoltaïques afin de permettre aux rayons solaires incidents d'irradier la surface inférieure (3b) de la serre, et le reste (3c) dudit toit (3) étant muni de panneaux photovoltaïques (10), **caractérisée en ce que** les panneaux photovoltaïques ont une capacité d'absorption de rayons solaires incidents qui augmente à partir d'une valeur minimale à la limite avec ladite partie (3a) du toit dépourvue de panneaux photovoltaïques (10) jusqu'à une valeur maximale sur le faîte (6) dudit toit (3).

2. Serre photovoltaïque selon la revendication 1, **caractérisée en ce que** ladite partie (3a) dudit toit totalement dépourvue de panneaux photovoltaïques a une étendue telle que les rayons solaires qui frappent ladite partie (3a) frappent la surface inférieure (3b) de ladite serre de manière à irradier la totalité de ladite surface inférieure (3b).

3. Serre photovoltaïque selon la revendication 1 ou 2, **caractérisée en ce que** ledit toit (3) est un toit à une seule pente inclinée à 45° par rapport à la surface inférieure (3b) de la serre.

4. Serre photovoltaïque selon une ou plusieurs des revendications précédentes, **caractérisée en ce que** ledit toit (3) a une partie de son étendue (3d) qui s'étend au-delà du faîte (6) dudit toit en tant qu'étendue de la partie (3c) équipée de panneaux photovoltaïques (10).

5. Serre photovoltaïque selon la revendication 4, **caractérisée en ce que** ladite partie (3d) de l'étendue dudit toit (3) est couverte de panneaux photovoltaïques (10) qui absorbent la totalité du rayonnement solaire incident.

6. Serre photovoltaïque selon la revendication 1, **caractérisée en ce que** ladite structure de support (2) comprend au moins deux parois en regard (20, 21), une première (21) de ces parois étant verticale par rapport à la surface inférieure de ladite serre et une deuxième (22) de ces parois étant inclinée par rapport à la verticale depuis ladite surface inférieure, ledit toit (3) étant relié à ladite paroi inclinée (20) au niveau du faîtage (6).

7. Serre photovoltaïque selon la revendication 6, **caractérisée en ce que** ladite paroi (20) est inclinée suivant un angle de 10° à 40° par rapport à la verticale depuis ladite surface inférieure.

8. Serre photovoltaïque selon la revendication 6, **caractérisée en ce que** ladite paroi verticale (21) et ladite paroi inclinée (20) sont munies de fenêtres (22) qui peuvent être ouvertes.

9. Serre photovoltaïque selon une ou plusieurs des revendication précédentes, **caractérisée en ce qu'**elle comporte des moyens de ventilation (23) conçus pour créer une convection forcée d'air à l'intérieur de ladite serre.
